# EUROPÄISCHE PATENTANMELDUNG

(11) **EP 1 209 016 A2**
(43) Veröffentlichungstag der Anmeldung: **29.05.2002**
(21) Anmeldenummer: 01126164.1
(22) Anmeldetag: 03.11.2001
(51) Int. Cl.: B60K 6/04, B60K 25/00

(54) **Hybridkraftfahrzeugantrieb mit Starter-Generator und elektrischen Nebenanaggregatsantrieb**

(30) Priorität: 22.11.2000 DE 10057798
(71) Anmelder: DaimlerChrysler AG, 70567 Stuttgart (DE)
(72) Erfinder: Frey, Jürgen, 73728 Esslingen (DE)

(57) **Zusammenfassung**

Kraftfahrzeugantrieb mit einem Verbrennungsmotor (2), mindestens einer elektrischen Maschine (18) als Starter-Generator und einer Kupplungsvorrichtung (22), durch welche die elektrische Maschine (18) mit dem Verbrennungsmotor (2) antriebsmäßig verbindbar ist. Mindestens ein Nebenaggregat (34, 36) ist mit der elektrischen Maschine (18) antriebsmäßig verbunden.

## Beschreibung

Die Erfindung betrifft einen Kraftfahrzeugantrieb gemäß dem Oberbegriff von Anspruch 1.

Ein Kraftfahrzeugantrieb dieser Art ist aus der DE 196 32 074 A1 bekannt. Ein Starter-Generator, der einen als Schwungrad ausgebildeten Rotor aufweist, ist mit einem Verbrennungsmotor kuppelbar, um diesen zu starten. Nach dem Start hat der Starter-Generator die Funktion einer Lichtmaschine bzw. eines Generators zum Laden einer elektrischen Batterie. Der Starter-Generator kann mit dem vorderen Ende oder dem hinteren Ende der Kurbelwelle des Verbrennungsmotors antriebsmäßig verbunden sein.

Das Gebrauchsmuster DE 94 22 162 Ul zeigt einen Kraftfahrzeug-Hybrid-Antrieb mit einer Reihenschaltung bestehend aus einem Verbrennungsmotor, einer ersten Kupplung, einem Getriebe und einer zweiten Kupplung und einer Fahrzeugachse. Zwischen den beiden Kupplungen ist eine elektrische Maschine mit dem Getriebe antriebsmäßig verbunden. Die elektrische Maschine ist als elektrischer Motor, als Generator, als elektro-magnetische Bremse, und als Starter zum Starten des Verbrennungsmotors betreibbar. Zur Stromerzeugung bei niedrigen Fahrzeuggeschwindigkeiten von z.B. 0 - 50 km/h, wo der Verbrennungsmotor nicht zur Traktion des Kraftfahrzeuges eingesetzt wird, ist ein zusätzlicher Generator erforderlich, welcher mit der Kurbelwelle des Verbrennungsmotors antriebsmäßig verbunden ist.

Die DE 29 43 554 A1 zeigt einen Kraftfahrzeug-Hybrid-Antrieb mit einer aus einem elektrischen Energiespeicher mit elektrischer Energie versorgbaren oder in diesen Energiespeicher elektrische Energie zurückspeisenden elektrischen Maschine, die über eine erste Trennkupplung mit einer Antriebsachse eines Kraftfahrzeuges und über eine zweite Trennkupplung mit einer zu ihr in Reihe angeordneten Brennkraftmaschine in Verbindung steht, wobei je nach Bedarf nur eine von beiden oder beide Trennkupplungen geöffnet oder geschlossen sind.

Die EP 0 649 769 A1 zeigt eine Antriebseinrichtung, welche an eine externe Stromversorgungseinrichtung anschließbar ist, für Verkehrsmittel wie z.B. einen Oberleitungsbus (Trolley-Bus) oder eine Straßenbahn mit externer Stromversorgung durch eine Oberleitung, oder eine Eisenbahn mit einer externen elektrischen Stromversorgung. Die Antriebseinrichtung enthält einen elektrischen Fahrantriebsmotor, der alternativ von der externen Stromversorgungseinrichtung oder von einem im Fahrzeug vorhandenen Generator mit Strom versorgbar ist, der von einem Verbrennungsmotor antreibbar ist. Der Generator ist mechanisch ständig mit Nebenaggregaten antriebsmäßig verbunden.

Antriebe, bei welchen die Fahrantriebsenergie von einem Verbrennungsmotor und von mindestens einer elektrischen Maschine erzeugt werden, werden allgemein als "Hybridantriebe" bezeichnet. Um einen solchen handelt es sich auch bei der Erfindung.

Durch die Erfindung soll die Aufgabe gelöst werden, einen Hybrid-Kraftfahrzeugantrieb derart auszubilden, daß er konstruktiv einfach ist, ein geringes Gewicht hat und weniger Energie verbraucht.

Diese Aufgabe wird gemäß der Erfindung durch die Merkmale von Anspruch 1 gelöst.

Weitere Merkmale der Erfindung sind in den Unteransprüchen enthalten.

Die Erfindung betrifft einen Kraftfahrzeugantrieb, enthaltend einen Verbrennungsmotor als Fahrantriebsmotor, mindestens eine elektrische Maschine, die als Starter-Generator alternativ als Starter zum Starten des Verbrennungsmotors oder als Generator betreibbar ist, eine erste Kupplungsvorrichtung, durch welche die elektrische Maschine alternativ vom Verbrennungsmotor antriebsmäßig trennbar oder mit ihm antriebsmäßig verbindbar ist, dadurch gekennzeichnet, daß ein Nebenaggregat-Antriebsweg von der elektrischen Maschine zu mindestens einem anzutreibenden Nebenaggregat vorgesehen ist, durch welchen das Nebenaggregat antreibbar ist.

Dies hat den Vorteil, daß die elektrische Maschine als Motor arbeiten und die Nebenaggregate antreiben kann, wenn der Verbrennungsmotor abgestellt ist. Wenn der Verbrennungsmotor eingeschaltet ist, kann er die elektrische Maschine antreiben zur Stromerzeugung für die Aufladung eines Stromspeichers.

Gemäß der bevorzugten Ausführungsform enthält der Nebenaggregat-Antriebsweg eine zweite Kupplungsvorrichtung, durch welche das mindestens eine Nebenaggregat antriebsmäßig mit der elektrischen Maschine verbindbar oder von der elektrischen Maschine trennbar ist.

Dies hat den Vorteil, daß Nebenaggregate, welche besonders viel Antriebsenergie benötigen, sowohl von der elektrischen Maschine als auch von dem Verbrennungsmotor abgekuppelt werden können, wenn die elektrische Maschine als Starter (Anlasser) arbeitet zum Starten des Verbrennungsmotors oder wenn die elektrische Maschine zusätzlich zum Verbrennungsmotor oder ohne eingeschalteten Verbrennungsmotor das Kraftfahrzeug antreibt, beispielsweise bei abgeschaltetem Verbrennungsmotor im niedrigen Fahrzeuggeschwindigkeitsbereich zwischen 0 km/h und 50 km/h oder bei eingeschaltetem Verbrennungsmotor zusätzlich zu diesem Fahrantriebsenergie liefert bei Fahrsituationen, wo besonders viel Antriebsenergie erforderlich ist, beispielsweise bei einem Überholvorgang oder an einem besonders steilen Berg. Nebenaggregate, welche wesentlich mehr Antriebsenergie benötigen als andere Nebenaggregate, sind beispielsweise Kältemittelverdichter einer Kraftfahrzeug-Klimaanlage oder hydraulische oder elektrische Antriebe für eine Seilwinde oder andere am Kraftfahrzeug vorgesehene Arbeitsgeräte. Ferner hat das Abkuppeln eines oder mehrerer Nebenaggregate den Vorteil, daß die elektrische Maschine kleiner und für eine kleinere Leistung ausgebildet sein kann, die ausreichend ist, um den Verbrennungsmotor zu starten oder um zusätzlich oder alternativ zu ihm Fahrzeugantriebsenergie zu liefern.

Ein Kraftfahrzeug enthält normalerweise auch Nebenaggregate, z.B.. eine Wasserpumpe oder eine Ölpumpe, welche wesentlich weniger Antriebsenergie benötigen als beispielsweise ein Kältemittelverdichter zum Verdichten von Kältemittel einer Klimaanlage. Solche, relativ wenig Antriebsenergie benötigende Nebenaggregate, können gemäß der Erfindung abkuppelbar oder gemäß anderer Ausführungsform nicht abkuppelbar mit dem Rotor der elektrischen Maschine antriebsmäßig verbunden sein.

Gemäß anderer bevorzugter Ausführungsform nach der Erfindung hat der Nebenaggregat-Antriebsweg zwei oder mehr Antriebszweige, die unterschiedliche Übersetzungsverhältnisse haben, und eines oder mehrere Nebenaggregate sind an nur einen Antriebszweig angeschlossen oder wahlweise umschaltbar mit dem einen oder dem anderen Antriebszweig verbindbar und dadurch mit verschiedenen Antriebsübersetzungen mit der elektrischen Maschine verbindbar.

Die Erfindung wird im folgenden mit Bezug auf die Zeichnungen anhand von bevorzugten Ausführungsformen als Beispiele beschrieben. In den Zeichnungen zeigen
- Fig. 1: schematisch einen Kraftfahrzeugantrieb nach der Erfindung,
- Fig. 2: schematisch einen weiteren Kraftfahrzeugantrieb nach der Erfindung,
- Fig. 3: schematisch einen nochmals weiteren Kraftfahrzeugantrieb nach der Erfindung.

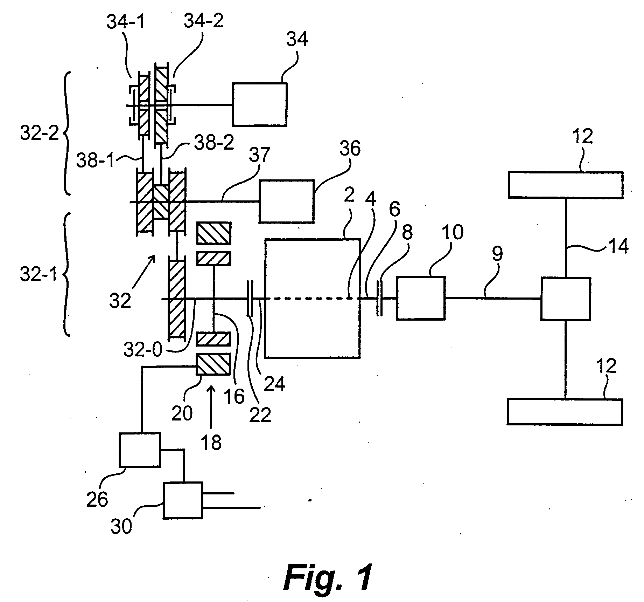

Fig. 1 zeigt einen Verbrennungsmotor 2 mit einer Kurbelwelle 4, deren fahrantriebsseitiges hinteres Ende 6 über eine Fahrantriebskupplung 8 eines Fahrantriebsstranges 9 mit einem Fahrantriebsgetriebe 10 kuppelbar ist zum Antrieb von Rädern 12 einer Fahrzeugachse 14, welche eine Vorderradachse oder eine Hinterradachse eines Kraftfahrzeuges sein kann.

Ein Rotor 16 einer elektrischen Maschine 18 ist relativ zu einem Stator 20 drehbar, axial zur Kurbelwelle 4 des Verbrennungsmotors 2 angeordnet und über eine erste Kupplungsvorrichtung 22 mit dem vorderen Ende 24 der Kurbelwelle 4 in Abhängigkeit von Betriebssituationen kuppelbar, d.h. antriebsmäßig verbindbar oder trennbar. Die elektrische Maschine 18 kann bei geschlossener erster Kupplungsvorrichtung 22 als Starter arbeiten zum Starten des Verbrennungsmotors 2 oder als Generator, welcher vom Verbrennungsmotor 2 angetrieben wird zur Stromerzeugung und Stromspeicherung in einem Stromspeicher 26, z.B. einer Batterie, aus welcher die elektrische Maschine 18 elektrische Energie erhält, wenn sie als Starter betrieben wird. Ferner kann die elektrische Maschine 18 bei geschlossener erster Kupplungsvorrichtung 22 die Fahrzeugräder 12 der Fahrzeugachse 14 antreiben, entweder bei eingeschaltetem Verbrennungsmotor 2 dessen Antriebsdrehmoment unterstützen oder bei abgeschaltetem Verbrennungsmotor 2 ohne ein Antriebsdrehmoment von dem Verbrennungsmotor 2. Ferner kann die elektrische Maschine 18 bei geschlossener erster Kupplungsvorrichtung 22 auch als elektromagnetische Fahrzeugbremse benutzt werden. Die Steuerung der elektrischen Maschine 18 und des Verbrennungsmotors 2 erfolgt durch eine elektronische Steuereinrichtung 30.

Die erste Kupplungsvorrichtung 22 ist vorzugsweise eine auch während ihrer Rotation und Drehmomentübertragung schaltbare Kupplung, beispielsweise eine von der elektronischen Steuereinrichtung 30 schaltbare Lamellenkupplung oder eine Fliehkraftkupplung, vorzugsweise eine in beiden Drehrichtungen selbsthemmende Fliehkraftkupplung. Mit dem Rotor 16 der elektrischen Maschine 18 ist, vorzugsweise auf deren von der ersten Kupplungsvorrichtung 22 abgewandten Vorderseite, mindestens ein Nebenaggregat-Antriebsweg 32 antriebsmäßig verbunden zum Antrieb von mindestens einem Nebenaggregat, wobei in den Zeichnungen ein erstes Nebenaggregat 34 und ein zweites Nebenaggregat 36 vorgesehen sind, um diese von der elektrischen Maschine 18 und/oder von dem Verbrennungsmotor 2 anzutreiben. Das erste Nebenaggregat 34 ist beispielsweise ein Kältemittelverdichter einer Klimaanlage eines Kraftfahrzeuges. Das zweite Nebenaggregat 36 ist beispielsweise eine Wasserpumpe zur Wasserkühlung des Verbrennungsmotors 2. Stattdessen oder zusätzlich könnte auch eine oder mehrere Ölpumpen oder Geräte als Nebenaggregate mit dem Nebenaggregat-Antriebsstrang antriebsmäßig verbunden oder verbindbar sein.

Der Nebenaggregat-Antriebsweg von Fig. 1 enthält eine zweite Kupplungsvorrichtung 34-1, 34-2, durch welche mindestens das erste Nebenaggregat 34 über den Nebenaggregat-Antriebsweg 32 mit der elektrischen Maschine 18 kuppelbar und entkuppelbar ist. Das zweite Nebenaggregat 36 ist mit dem Nebenaggregat-Antriebsweg 32 antriebsmäßig fest verbunden, d.h. nicht abkuppelbar. Jedoch könnte auch das zweite Nebenaggregat 36 abkuppelbar angeordnet sein.

Der Nebenaggregat-Antriebsweg weist zwei (oder mehrere) Antriebsstufen 32-1 und 32-2 auf. Das zweite Nebenaggregat 36 ist am Ende der ersten Antriebsstufe 32-1 koaxial zu einer Zwischenwelle 37 angeordnet und mit dieser drehfest verbunden. Das erste Nebenaggregat 34 ist am Ende der zweiten Stufe 32-2 über die zweite Kupplungsvorrichtung 34-1, 34-2 mit dem Nebenaggregat-Antriebsweg 32 in Abhängigkeit von der Steuereinrichtung 30 kuppelbar und entkuppelbar.

Der Nebenaggregat-Antriebszweig 32 hat in der zweiten Stufe 32-2 zwei Antriebszweige 38-1 und 38-2, die unterschiedliche Übersetzungen haben, so daß das erste Nebenaggregat 34 über eine Kupplung 34-1 der zweiten Kupplungsvorrichtung mit einer anderen Antriebsübersetzung antreibbar ist als über eine zweite Kupplung 34-2 der zweiten Kupplungsvorrichtung 34-1, 34-2. Das erste Nebenaggregat 34 ist zur Rotationsachse der beiden Kupplungen 34-1 und 34-2 axial angeordnet.

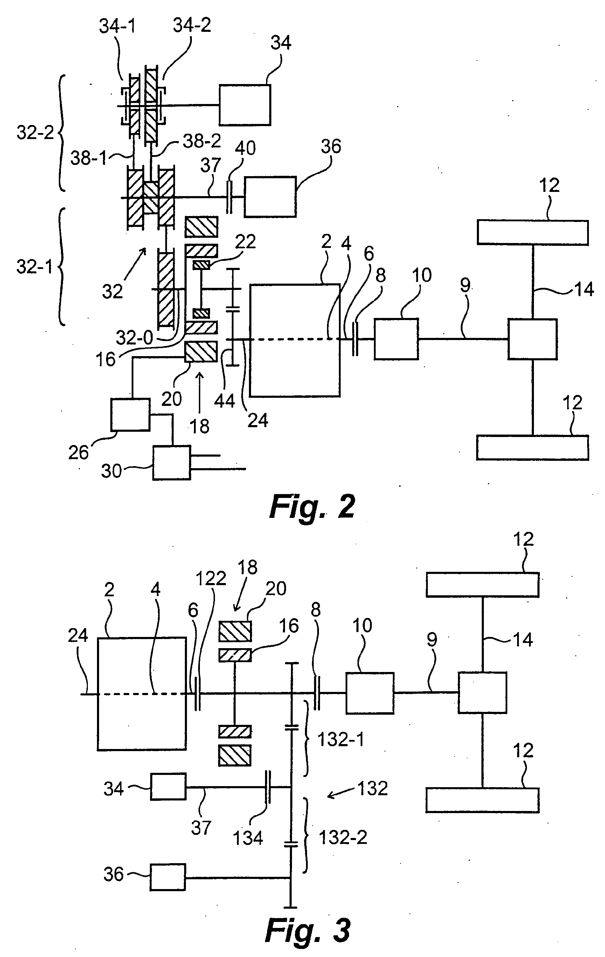

Gemäß einer nicht gezeigten Ausführungsform könnte bei den Kraftfahrzeugantrieben von Fig. 1 und 2 zusätzlich oder alternativ zur zweiten Kupplungsvorrichtung 34-1, 34-2 eine schaltbare Kupplung zwischen dem Rotor 16 der elektrischen Maschine 18 und dem Eingang 32-0 des Nebenaggregat-Antriebsweges vorgesehen sein.

Die Ausführungsform von Fig. 2 unterscheidet sich von Fig. 1 lediglich dadurch, daß zusätzlich die Möglichkeit gezeigt ist, auch das zweite Nebenaggregat 36 über eine schaltbare dritte Kupplungsvorrichtung 40 mit dem Nebenaggregat-Antriebsweg 32 zu kuppeln oder zu entkuppeln. Ferner zeigt Fig. 2 die alternativ oder gleichzeitig verwendbare Möglichkeit, die erste Kupplungsvorrichtung 22 in den Rotor 16 der elektrischen Maschine 18 zu integrieren und/oder in die Antriebsverbindung zwischen dem Rotor 18 und der Kurbelwelle 4 eine Zwischenstufe 44 (Getriebe, Riemen- oder Kettenantrieb) einzufügen. Diese kann zwischen der Kurbelwelle 4 und der ersten Kupplungsvorrichtung 22 angeordnet werden, wie es Fig. 2 zeigt, jedoch besteht bei der Ausführungsform nach Fig. 1 auch die Möglichkeit, eine solche Übersetzung 44 stattdessen zwischen der ersten Kupplungsvorrichtung 22 und dem Rotor 16 antriebsmäßig anzuordnen. Fig. 2 zeigt die Zwischenstufe 44 mit dem vorderen Ende 24 der Kurbelwelle 4 antriebsmäßig verbunden. Stattdessen könnte diese Zwischenstufe 44 mit dem fahrantriebsseitigen hinteren Ende 6 der Kurbelwelle 4 antriebsmäßig fest oder über eine Kupplung 22 antriebsmäßig verbunden oder verbindbar sein.

Fig. 2 macht deutlich, daß auch die Möglichkeit besteht, nur das zweite Nebenaggregat 36 über eine Kupplungsvorrichtung 40 mit dem Nebenaggregat-Antriebsweg 32 kuppelbar zu verbinden, und das erste Nebenaggregat 34 durch Weglassen der zweiten Kupplungsvorrichtung 34-1, 34-2 drehfest, nicht kuppelbar, mit dem Nebenaggregat-Antriebsweg 32 zu verbinden. Hierbei können auch die beiden Nebenaggregate 34 und 36 gegeneinander vertauscht werden. Ferner könnte anstatt zwei oder mehr Nebenaggregaten nur ein einziges Nebenaggregat vorgesehen sein.

Bei geöffneter erster Kupplungsvorrichtung 22 kann die elektrische Maschine 18 über den Nebenaggregat-Antriebsweg 32 die Nebenaggregate 34 und/oder 36 unabhängig von der Funktion des Verbrennungsmotors 2 antreiben, welcher abgeschaltet oder zum Antrieb der Fahrzeugachse 14 eingeschaltet sein kann.

Bei der Ausführungsform von Fig. 3 ist diese Möglichkeit nicht gegeben. Die elektrische Maschine 18 kann zwar unabhängig vom Verbrennungsmotor 2 die Nebenaggregate 34 und 36 antreiben, jedoch nur, wenn die elektrische Maschine 18 sowohl von dem Verbrennungsmotor 2 auch vom Fahrantriebsgetriebe 10 abgekuppelt ist. Der Rotor 16 der elektrischen Maschine 18 ist an dem fahrantriebsseitigen hinteren Ende 6 der Kurbelwelle 4, vorzugsweise axial zu ihr, im Fahrantriebsstrang 9 seriell zwischen einer motorseitigen ersten Kupplungsvorrichtung 122 und der getriebeseitigen Fahrantriebskupplung 8 angeordnet. Dadurch muß nicht nur die Fahrantriebskupplung 8, sondern auch die erste Kupplungsvorrichtung 122 so stark ausgebildet sein, daß sie das gesamte Fahrantriebsdrehmoment übertragen kann. Dies bedeutet, daß die erste Kupplungsvorrichtung 122 von Fig. 3 wesentlich stärker ausgebildet werden muß als die erste Kupplungsvorrichtung 22 von Fig. 1 und Fig. 2.

Der Nebenaggregat-Antriebsweg 132 von Fig. 3 ist ein zweistufiges Getriebe mit einer ersten Stufe 132-1 und einer zweiten Stufe 132-2. Das erste Nebenaggregat 34 und die zu ihrer Ankupplung an den Nebenaggregat-Antriebsweg 132 erforderliche steuerbare zweite Kupplungsvorrichtung 134 sind koaxial zur Zwischentriebwelle 36 angeordnet. Das zweite Nebenaggregat 36 ist fest (oder durch eine schaltbare Kupplung) mit dem Ende der zweiten Stufe 132-2 antriebsmäßig verbunden.

Bei allen Ausführungsformen der Erfindung ist, gesteuert durch die elektronische Steuereinrichtung 30, a) die elektrische Maschine 18 als Starter zum Starten des Verbrennungsmotors 2 betreibbar, b) die elektrische Maschine 18 als Generator zur Stromerzeugung von dem Verbrennungsmotor 2 antreibbar, und c) ein Stop- und Fahrbetrieb des Kraftfahrzeuges in der Stadt. durchführbar, wobei c1) während der Stop-Phase der Verbrennungsmotor 4 abschaltbar ist und das mindestens eine Nebenaggregat 34 und/oder 36 von der elektrischen Maschine 18 antreibbar ist, welche hierbei als elektrischer Motor betreibbar ist und von der Stromquelle 26 mit Strom versorgbar ist, wobei ferner c2) am Ende der Stop-Phase der Verbrennungsmotor 2 von der elektrischen Maschine 18 startbar ist, welche jetzt als Starter betreibbar ist, und wobei c3) während des für die Fahr-Phase laufenden Verbrennungsmotors 2 die elektrische Maschine 18 und das mindestens eine Nebenaggregat 34 und/oder 36 von dem Verbrennungsmotor 2 antreibbar ist. Hierbei kann die elektrische Maschine je nach Ausführungsform oder Fahrsituation leer mitlaufen oder als Generator betrieben werden zur Stromerzeugung.

Durch die Verwendung einer Fliehkraftkupplung als erste Kupplungsvorrichtung 22 von Fig. 1 und 2 bzw. 122 von Fig. 3 schließt diese Kupplung in Abhängigkeit von der Rotordrehzahl. Damit ist ein Impulsstart des Verbrennungsmotors 2 auf einfache Weise möglich. Unterhalb dieser Rotordrehzahl findet keine Kraftübertragung von der elektrischen Maschine 18 auf die Kurbelwelle 4 statt und die Nebenaggregate können sowohl bei laufendem als auch bei abgeschaltetem Verbrennungsmotor 2 von der elektrischen Maschine 18 angetrieben werden. Durch die Verwendung von Übersetzungsstufen im Nebenaggregat-Antriebsweg 32 bzw. 132 können die Nebenaggregate 34 und 36, die elektrische Maschine 18 und der Verbrennungsmotor 2 mindestens annähernd in ihren optimalen Drehzahlbereichen und optimalen Belastungsbereichen betrieben werden.

"Übersetzungen" bedeutet bei dieser Beschreibung und in den Patentansprüchen eine Übersetzung der Drehzahlen nach oben oder nach unten (Untersetzung), abhängig von den Erfordernissen in der Praxis.

## Patentansprüche

1. Kraftfahrzeugantrieb, enthaltend einen Verbrennungsmotor (2) als Fahrantriebsmotor, mindestens eine elektrische Maschine (18), die als Starter-Generator alternativ als Starter zum Starten des Verbrennungsmotors oder als Generator betreibbar ist, eine erste Kupplungsvorrichtung (22; 122), durch welche die elektrische Maschine (18) alternativ vom Verbrennungsmotor (2) antriebsmäßig trennbar oder mit ihm antriebsmäßig verbindbar ist,
**dadurch gekennzeichnet,**
**daß** ein Nebenaggregat-Antriebsweg (32; 132) von der elektrischen Maschine (18) zu mindestens einem anzutreibenden Nebenaggregat (34, 36) vorgesehen ist, durch welchen das Nebenaggregat antreibbar ist.

2. Kraftfahrzeugantrieb nach Anspruch 1,
**dadurch gekennzeichnet,**
**daß** der Nebenaggregat-Antriebsweg (32; 132) eine zweite Kupplungsvorrichtung (34-1, 34-2, 40; 132) enthält, durch welche mindestens eines der Nebenaggregate (34, 36) antriebsmäßig mit der elektrischen Maschine (18) verbindbar oder von der elektrischen Maschine trennbar ist.

3. Kraftfahrzeugantrieb nach Anspruch 1 oder 2,
**dadurch gekennzeichnet,**
**daß** mindestens ein zweites Nebenaggregat (36, 34) vorgesehen ist, welches mit dem Nebenaggregat-Antriebsstrang (32; 132) antriebsmäßig verbunden oder verbindbar ist.

4. Kraftfahrzeugantrieb nach Anspruch 3,
**dadurch gekennzeichnet,**
**daß** der Nebenaggregat-Antriebsweg (32; 132) mindestens zwei Antriebsstufen aufweist, daß eines der Nebenaggregate (34, 36) am Ende der ersten Antriebsstufe (32-1; 132-1) und das andere Nebenaggregat (36, 34) am Ende der zweiten Stufe mit dem Nebenaggregat-Antriebsweg antriebsmäßig verbunden oder verbindbar ist.

5. Kraftfahrzeugantrieb nach einem der vorhergehenden Ansprüche,
**dadurch gekennzeichnet,**
**daß** der Nebenaggregat-Antriebsweg (32) zwei Antriebszweige (38-1, 38-2) hat, die unterschiedliche Übersetzungsverhältnisse haben, daß eines (34) der Nebenaggregate (34, 36) durch die zweite Kupplungsvorrichtung (34-1, 34-2) alternativ mit dem einen oder dem anderen der beiden Antriebszweige kuppelbar ist, um das eine Nebenaggregat (34) mit dem Nebenaggregat-Antriebsweg (32) zu verbinden.

6. Kraftfahrzeugantrieb nach Anspruch 4 und 5,
**dadurch gekennzeichnet,**
**daß** die zweite Antriebsstufe (32-2) die beiden Antriebszweige (38-1, 38-2) aufweist.

7. Kraftfahrzeugantrieb nach einem der vorhergehenden Ansprüche,
**dadurch gekennzeichnet,**
**daß** die elektrische Maschine (18) als Elektromotor betreibbar ist.

8. Kraftfahrzeugantrieb nach einem der vorhergehenden Ansprüche,
**dadurch gekennzeichnet,**
**daß** die elektrische Maschine (18) als elektro-magnetische Motorbremse betreibbar ist.

9. Kraftfahrzeugantrieb nach einem der vorhergehenden Ansprüche,
**dadurch gekennzeichnet,**
**daß** die Kurbelwelle (4) des Verbrennungsmotors (2) ein hinteres Ende (6), welches mit einem Fahrantriebsstrang (9) verbindbar ist, und ein vorderes Ende (24) hat, und daß die elektrische Maschine (18) über die erste Kupplungsvorrichtung (22) mit dem vorderen Ende (24) der Kurbelwelle (4) antriebsmäßig verbindbar ist.

10. Kraftfahrzeugantrieb nach einem der vorhergehenden Ansprüche,
**dadurch gekennzeichnet,**
**daß** zwischen dem Verbrennungsmotor (2) und der elektrischen Maschine (18) mindestens eine Antriebsstufe (44) gebildet ist.

11. Kraftfahrzeugantrieb nach einem der vorhergehenden Ansprüche,
**dadurch gekennzeichnet,**
**daß** die elektrische Maschine (18) und der Verbrennungsmotor (2) an eine elektronische Steuereinrichtung (30) angeschlossen sind, durch welche a) die elektrische Maschine (18) als Starter zum Starten des Verbrennungsmotors (2) betreibbar ist, b) die elektrische Maschine (18) als Generator zur Stromerzeugung von dem Verbrennungsmotor (2) antreibbar ist, und c) ein Stop- und Fahrbetrieb eines Kraftfahrzeuges durchführbar ist, wobei c1) während der Stop-Phase der Verbrennungsmotor (2) abschaltbar ist und das mindestens eine Nebenaggregat (34, 36) von der elektrischen Maschine (18) antreibbar ist, welche hierbei als elektrischer Motor betreibbar ist und von einer Stromquelle mit elektrischem Strom versorgbar ist, wobei ferner c2) gegen Ende der Stop-Phase der Verbrennungsmotor (2) von der elektrischen Maschine (18) startbar ist, welche jetzt als Starter betreibbar ist, und wobei c3) während des für die Fahr-Phase laufenden Verbrennungsmotors (2) die elektrische Maschine (18) und das mindestens eine Nebenaggregat (34, 36) von dem Verbrennungsmotor (2) antreibbar sind.

12. Kraftfahrzeugantrieb nach einem der vorhergehenden Ansprüche,
**dadurch gekennzeichnet,**
**daß** die erste Kupplungsvorrichtung (22) eine Fliehkraftkupplung aufweist, welche mindestens in einer Drehrichtung selbsthemmend ist.

13. Kraftfahrzeugantrieb nach einem der vorhergehenden Ansprüche,
**dadurch gekennzeichnet,**
**daß** die erste Kupplungsvorrichtung (22) eine in beiden Drehrichtungen selbsthemmende Fliehkraftkupplung aufweist.
